(19) Europäisches Patentamt
European Patent Office
Office européen des brevets

(11) **EP 2 871 425 A1**

(12) **EUROPEAN PATENT APPLICATION**

(43) Date of publication:
**13.05.2015 Bulletin 2015/20**

(51) Int Cl.:
*F24F 1/00* *(2011.01)*     *F24F 3/16* *(2006.01)*

(21) Application number: **14165891.4**

(22) Date of filing: **24.04.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.11.2013   KR 20130136499**

(71) Applicants:
• **LG Electronics, Inc.
Seoul 150-721 (KR)**
• **Seoul National University R&DB Foundation
Seoul 151-742 (KR)**

(72) Inventors:
• **Jang, Duri
Kyungsangnam-do 641-110 (KR)**
• **Kwon, Hyungwook
Seoul 151-742 (KR)**
• **Lee, Giseop
Kyungsangnam-do 641-110 (KR)**
• **Park, Bonggyun
Kyungsangnam-do 641-110 (KR)**
• **Jung, Jewon
Seoul 151-742 (KR)**

(74) Representative: **Vossius & Partner
Patentanwälte Rechtsanwälte mbB
Siebertstrasse 3
81675 München (DE)**

(54) **Air conditioner**

(57)    An air conditioner according to the present invention includes: an air-conditioning assembly that takes air inside and discharges the air after conditioning the air; and an ultrasonic generator that is disposed in the air-conditioning assembly and generates ultrasonic waves, and can maintain the mosquito evasion rate at an appropriate level and has high reliability in repelling of mosquitoes, by generating ultrasonic waves of which the frequency is 10kHz to 100kHz and the sound pressure level measured at 5cm directly from the ultrasonic generator is 80dB or more.

FIG. 2

**Description**

The present invention relates to an air conditioner, and more particularly, to an air conditioner equipped with an ultrasonic generator that generates ultrasonic waves that pests hate.

In general, air conditioners can make an interior pleasant by taking air inside through an air intake, changing the temperature, moisture, or purity of the air, and then discharging the air into the interior through an air outlet.

Air conditioners can cool/heat an interior when they are equipped with a compressor, a condenser, an expansion device, and an evaporator. Air conditioners can purify the air in an interior, when they are equipped with a purifier that purifies air.

Recently, a technology of repelling pests using an air conditioner by equipping the air conditioner with a pest repeller that repels mosquitoes has been developed.

An object invention of the present invention is to provide an air conditioner that can control the mosquito evasion rate over an appropriate level by controlling the frequency and the sound pressure level of ultrasonic waves.

In order to achieve the objects of the present invention, an air conditioner according to the present invention includes: an air-conditioning assembly that takes air inside and discharges the air after conditioning the air; and an ultrasonic generator that is disposed in the air-conditioning assembly and generates ultrasonic waves, in which the ultrasonic generator generates ultrasonic waves of which the frequency is 10kHz to 100kHz and the sound pressure level measured at 5cm directly from the ultrasonic generator is 80dB or more.

The ultrasonic generator may generate ultrasonic waves of which the sound pressure level measured at 5cm directly from the ultrasonic generator is 90dB or more and less than 100dB.

The ultrasonic generator may generate ultrasonic waves of which the sound pressure level measured at 25cm directly from the ultrasonic generator is 75dB or more.

The ultrasonic generator may generate ultrasonic waves of which the sound pressure level measured at 45cm directly from the ultrasonic generator is 70dB or more.

The air frequency of ultrasonic waves generated by the ultrasonic generator may be 10kHz to 50kHz.

The frequency of ultrasonic waves generated by the ultrasonic generator may be 30kHz.

According to the present invention, it is possible to maintain the mosquito evasion rate at an appropriate level and provide high reliability in repelling of mosquitoes, by controlling the ultrasonic generator at the optimum frequency and sound pressure level.

Features and advantages of the present invention will be further understood with reference to the accompanying drawings described below with the following detailed description of embodiments of the present invention, in which:

FIG. 1 is a view of an air conditioner according to an embodiment of the present invention;
FIG. 2 is a control block diagram of the air conditioner according to an embodiment of the present invention; and
FIG. 3 is a view showing an example of a place provided for calculating the mosquito evasion rate against ultrasonic waves generated by an ultrasonic generator for the air conditioner according to an embodiment of the present invention.

Embodiments of the present invention for achieving the objects in detail will be described hereinafter with reference to the accompanying drawings. In the description of the embodiments, like components are given like names and reference numerals and they are not additionally described.

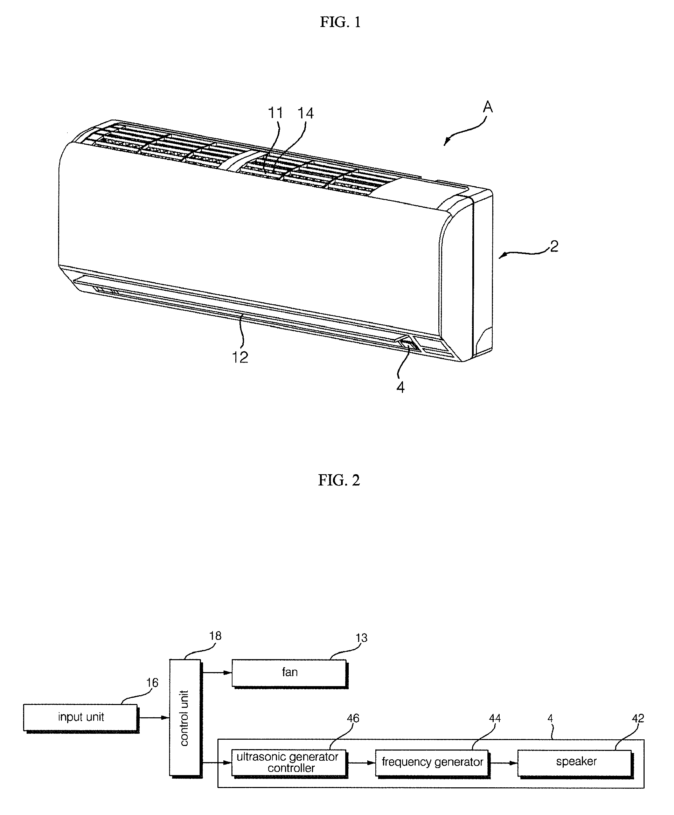

FIG. 1 is a view of an air conditioner according to an embodiment of the present invention and FIG. 2 is a control block diagram of the air conditioner according to an embodiment of the present invention.

An air conditioner of the present embodiment includes an air-conditioning assembly that takes air inside, conditions the air, and then discharges it into an interior and an ultrasonic generator 4 that is disposed in the air-conditioning assembly2 and generates ultrasonic waves.

The air-conditioning assembly 2 has an air intake 11 through which the air in an interior is sucked and an air outlet 12 through which the air taken inside through the air intake 11 and conditioned in the air-conditioning assembly 2 is discharged into the interior.

The air-conditioning assembly 2 may include a fan that takes the air in an interior into the air-conditioning assembly 2 and then sends it back to the interior.

The air-conditioning assembly 2 may include an air-conditioning unit 14 that changes the temperature of an interior. The air-conditioning unit 14 can change the temperature, humidity, or purity of air.

The air-conditioning unit 14 may include at least one of a heat exchanging unit that changes at least one of the temperature and the humidity of air and a purifying unit that purifies air. The heat exchanging unit may include at least one of a heat exchanger through which a coolant exchanges heat with air, an electric heater that heats air by generating heat when a current is supplied, and a thermoelectric module that has a heat dissipater and a heat absorber and heats air with the heat dissipater or cools air with the heat absorber.

The purifying unit may include at least one of a filter through which dust in air is filtered, an electric dust collector that static-electrically collects dust in air, and an ion generator that generates ion into air.

The air conditioner may further include an input unit 16 through which instructions can be inputted to the air conditioner and a control unit 18 that controls the air-conditioning assembly 2 in accordance with input through the input unit 16 and the operation conditions of the air conditioner.

The control unit 18 can turns on the fan 13 when the air conditioner is operated and can turns off the fan 13 when the air conditioner is stopped. The control unit 18 can control the ultrasonic generator 4.

The ultrasonic generator 4 is disposed in the air-conditioning assembly 2 and can generate ultrasonic waves into the interior where the air-conditioning assembly 2 is disposed. The ultrasonic generator 4 can generate ultrasonic waves that pests such as mosquitoes hate. The ultrasonic generator 4 can generate ultrasonic waves that pests such as mosquitoes hate. The ultrasonic generator 4 may include a speaker or a piezoelectric buzzer that can generate ultrasonic waves. The ultrasonic generator 4 may generate ultrasonic waves that particularly mosquitoes of various pests hate.

The ultrasonic generator 4 may include a speaker 42, a frequency generator 44 that outputs signals to the speaker 42, and an ultrasonic generator control unit 46 that applies a voltage to the frequency generator 44.

The speaker 42 may be disposed to be exposed outside the air-conditioning assembly 2.

The frequency generator 44 can generate frequencies of 10□100kHz and increase the frequencies by 5kHz.

The ultrasonic generator control unit 46 can apply a voltage of 12V to the frequency generator 44. The ultrasonic generator control unit 46 can be connected with the control unit 18 and apply a voltage to the frequency generator 44 in response to a signal from the control unit 18.

The frequency of the ultrasonic wave generated by the ultrasonic generator 4 and the sound pressure level of the space to which the ultrasonic wave travels may have the optimum range with a high mosquito evasion rate. The sound pressure level may be high at the area close to the ultrasonic generator 4 and low at the area far from the ultrasonic generator 4. The repellent degree against mosquitoes may be different in an interior, depending on the distance from the ultrasonic generator 4 and the ultrasonic generator 4 can generate ultrasonic waves traveling at sound pressure level with a high mosquito evasion rate against mosquitoes.

The ultrasonic generator 4 can generate ultrasonic waves with 10kHz to 100kHz and a sound pressure level of 80dB or more that is measured at 5cm directly from the ultrasonic generator 4.

The ultrasonic generator 4 may generate ultrasonic waves with a sound pressure level of 90dB or more and less than 100dB which is measured at 5cm directly from the ultrasonic generator 4.

The ultrasonic generator 4 may generate ultrasonic waves with a sound pressure level of 75dB or more which is measured at 25cm directly from the ultrasonic generator 4.

The ultrasonic generator 4 may generate ultrasonic waves with a sound pressure level of 70dB or more which is measured at 45cm directly from the ultrasonic generator 4.

The frequency of the ultrasonic waves generated by the ultrasonic generator 4 may be 10kHz to 50kHz. The frequency of the ultrasonic waves generated by the ultrasonic generator 4 may be 30kHz.

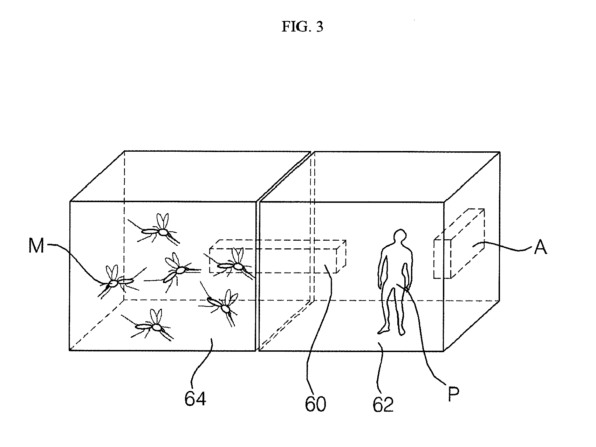

FIG. 3 is a view showing an example of a place provided for calculating the mosquito evasion rate against ultrasonic waves generated by an ultrasonic generator for the air conditioner according to an embodiment of the present invention.

The test place was two chambers connected by a mosquito channel 60 through which mosquitoes M can move inside and outside and the test was conducted under the conditions that a person P that is a decoy for attracting the mosquitoes M was in the first chamber 62 of the two chambers 62 and 54 and fifty mosquitoes M were released into the second chamber 64 of the two chambers 62 and 64.

In the two chambers 62 and 64, the first chamber 62 with the person P therein can be assumed as an interior with an air conditioner and the second chamber 64 with the mosquitoes M can be assumed as the outside.

The test was conducted with an air conditioner A with the air-conditioning assembly 2 and the ultrasonic generator 4 installed in the first chamber 22 and the air conditioner was operated in a normal air-conditioning mode with the ultrasonic generator 4 turned off and the fan 13 of the air-conditioning assembly 2 turned on and a mosquito-repelling air-conditioning mode with the ultrasonic generator 4 turned on and the fan 13 of the air-conditioning assembly 2 turned on in the test.

The person counted the mosquitoes M coming into the first chamber 62 every 10 minutes for 90 minutes in the first chamber 62.

The mosquito evasion rate R could be calculated as the following Equation 1 in accordance with the number of mosquitoes M coming into the chamber 62.

[Equation 1]

Mosquito evasion rate R=(A-B)/A X 100

where A is the number of mosquitoes coming into the first chamber for with the air conditioner operating in the normal air-conditioning mode for 90 minutes.

Further, B is the number of mosquitoes coming into the first chamber for with the air conditioner operating in the mosquito-repelling air-conditioning mode for 90 minutes. The test was conducted with different sound pressure levels of ultrasonic wave generated by the ultrasonic generator 4 and the data of sound pressure level when the mosquito evasion rate R calculated from Equation 1 is 60% or more is as in the following Table 1.

The frequency of the ultrasonic wave generated by the ultrasonic generator 4 was 30.08kHz in the test.

[Table 1]

| Distance from ultrasonic generator | Test 1 | Test 2 | Test 3 | Avg. |
|---|---|---|---|---|
| 5cm | 91.2dB | 91.4dB | 91.4dB | 91.33dB |
| 25cm | 79.4dB | 79.3dB | 79.3dB | 79.33dB |
| 45cm | 76.0dB | 74.8dB | 75.0dB | 75.26dB |

As shown in Table 1, the sound pressure levels with the mosquito evasion rate of 60% or more are different at each distance from the ultrasonic generator 4 and the sound pressure levels measured at 5cm directly from the ultrasonic generator 4 are 80dB or more and the average sound pressure level of the tests is 91.33. It can be seen that the sound pressure level that was at 5cm directly from the ultrasonic generator 4, with the mosquito evasion rate of 60% or more, is 90dB or more and less 100dB.

Further, as in Table 1, it can be seen that the sound pressure levels measured at 25cm directly from the ultrasonic generator 4 are 75dB or more and the average of the tests is 79.33dB.

Further, it can be seen that the sound pressure levels measured at 45cm directly from the ultrasonic generator 4 are70dB or more and the average of the tests is 75.26dB.

The sound pressure levels of the ultrasonic wave generated by the ultrasonic generator 4 and the mosquito evasion rate may be different, depending on the size of the space, so the result of measuring sound pressure levels in the mosquito channel 60 with different sizes of spaces of $20m^3$, $37m^3$, $50m^3$, $63m^3$ is as in the following Table 2.

[Table 2]

| Size of space [$m^3$] | Sound pressure level in mosquito channel | Evasion rate of mosquitoe[%] |
|---|---|---|
| 20 | 68 | 81 |
| 33 | 63 | 73 |
| 50 | 59 | 60 |
| 63 | 50 | 10 |

As shown in Table 2, it can be seen that the higher the sound pressure level in the mosquito channel 60, the higher the mosquito evasion rate, while the lower the sound pressure level in the mosquito channel 60, the lower the mosquito evasion rate. The air conditioner can have the mosquito evasion rate of 60%, when the sound pressure level for repelling mosquitoes is about 60dB or more.

**Claims**

1.  An air conditioner comprising:

    an air-conditioning assembly (2) configured to take air inside and to discharge the air after conditioning the air; and
    an ultrasonic generator (4) that is disposed in the air-conditioning assembly (2) and is configured to generate ultrasonic waves,
    wherein the ultrasonic generator (4) is configured to generate ultrasonic waves of which the frequency is 10kHz to 100kHz and of which the sound pressure level measured at 5cm directly from the ultrasonic generator (4) is 80dB or more.

2. The air conditioner of claim 1, wherein the ultrasonic generator (4) is configured to generate ultrasonic waves of which the sound pressure level measured at 5cm directly from the ultrasonic generator (4) is 90dB or more and less than 100dB.

3. The air conditioner of claim 1 or 2, wherein the ultrasonic generator (4) is configured to generate ultrasonic waves of which the sound pressure level measured at 25cm directly from the ultrasonic generator (4) is 75dB or more.

4. The air conditioner of claim 1, 2, or 3, wherein the ultrasonic generator (4) is configured to generate ultrasonic waves of which the sound pressure level measured at 45cm directly from the ultrasonic generator (4) is 70dB or more.

5. The air conditioner of claims 1 to 4, wherein the ultrasonic generator (4) is configured to generate ultrasonic waves of which the frequency is 10kHz to 50kHz.

6. The air conditioner of claim 5, wherein the ultrasonic generator (4) is configured to generate ultrasonic waves of which the frequency is 30kHz.

FIG. 1

FIG. 2

FIG. 3

Europäisches Patentamt

European Patent Office

Office européen des brevets

## EUROPEAN SEARCH REPORT

Application Number

EP 14 16 5891

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/027996 A2 (LG ELECTRONICS INC [KR]; LEE DONG WON [KR]; PARK SUNG KWAN [KR]; KIM J) 10 March 2011 (2011-03-10) * paragraph [0086] - paragraph [0090]; figures 1-3 * | 1-6 | INV.<br>F24F1/00<br>F24F3/16 |
| X | WO 2011/016703 A2 (LG ELECTRONICS INC [KR]; LEE DONG WON [KR]; PARK SUNG KWAN [KR]; KIM J) 10 February 2011 (2011-02-10) * paragraph [0111] - paragraph [0117] * | 1-6 | |
| X | JP 2011 002124 A (PANASONIC CORP) 6 January 2011 (2011-01-06) * paragraph [0038] - paragraph [0040]; figure 1 * | 1-6 | |
| X | JP 2003 014267 A (DAIKIN IND LTD) 15 January 2003 (2003-01-15) * abstract; figure 1 * | 1-6 | |
| X | KR 2008 0055450 A (LG ELECTRONICS INC [KR]) 19 June 2008 (2008-06-19) * abstract; figure 1 * | 1-6 | TECHNICAL FIELDS SEARCHED (IPC)<br><br>F24F |

The present search report has been drawn up for all claims

| Place of search | Date of completion of the search | Examiner |
|---|---|---|
| Munich | 24 February 2015 | Vuc, Arianda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 14 16 5891

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2015

| Patent document cited in search report | | | Publication date | Patent family member(s) | | | Publication date |
|---|---|---|---|---|---|---|---|
| WO 2011027996 | A2 | | 10-03-2011 | CN | 102483253 | A | 30-05-2012 |
| | | | | EP | 2475936 | A2 | 18-07-2012 |
| | | | | KR | 20110026265 | A | 15-03-2011 |
| | | | | US | 2012171945 | A1 | 05-07-2012 |
| | | | | WO | 2011027996 | A2 | 10-03-2011 |
| WO 2011016703 | A2 | | 10-02-2011 | NONE | | | |
| JP 2011002124 | A | | 06-01-2011 | NONE | | | |
| JP 2003014267 | A | | 15-01-2003 | NONE | | | |
| KR 20080055450 | A | | 19-06-2008 | NONE | | | |

EPO FORM P0459